(19) **Europäisches Patentamt European Patent Office Office européen des brevets**

(11) **EP 4 704 386 A1**

(12) **EUROPEAN PATENT APPLICATION**

(43) Date of publication:
04.03.2026 Bulletin 2026/10

(21) Application number: 25197760.9

(22) Date of filing: 22.08.2025

(51) International Patent Classification (IPC):
*H04L 9/40* (2022.01)          *H04L 67/06* (2022.01)
*H04L 67/62* (2022.01)

(52) Cooperative Patent Classification (CPC):
**H04L 63/0428; H04L 67/06; H04L 67/62**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 29.08.2024  US 202463688452 P
29.08.2024  US 202463688825 P
31.07.2025  US 202563854873 P

(71) Applicant: **Cision US Inc.**
**Chicago, Illinois 60606 (US)**

(72) Inventor: **WALLS, Mark**
**Portland, OR 97217 (US)**

(74) Representative: **Kutzenberger Wolff & Partner**
**Waidmarkt 11**
**50676 Köln (DE)**

(54) **SIMULTANEOUS CONTENT DELIVERY METHOD, SYSTEM AND SOFTWARE**

(57)    A computer-implemented method (and associated system and software) of providing simultaneous secure delivery of decrypted electronically stored content to remotely located client computers via an electronic communication network. The method includes acquiring operating variable information about client computers; calculating a release time when decryption is enabled for each client computer to start decrypting a first byte of a set of encrypted electronic content units obtained by such client computer; and transmitting computer-executable instructions to begin decryption at the release time so that each client computer is securely delivered decrypted content simultaneously.

Fig -1

EP 4 704 386 A1

**Description**

CROSS-REFERENCE TO RELATED APPLICATIONS

The present application claims the benefit of the filing date of United States Application Serial No. 63/688,452, filed August 29, 2024, United States Application Serial No. 63/688,825, filed August 29, 2024, and United States Application Serial No. 63/854,873, filed July 31, 2025, the contents of which are incorporated by reference in their entirety.

FIELD

The present description relates to a method, system, and software for simultaneous content delivery and, more specifically, to a method, system, and software for providing simultaneous secure delivery of decrypted electronically stored content (e.g., press releases and other corporate announcements and/or reports) to thereby realize improved computing and network functionality.

BACKGROUND

Simultaneous secure delivery of decrypted electronically stored content is especially important when transmitting sensitive content. Such sensitive content may include press releases and other corporate announcements and/or reports about corporate activities. It may also include other types of communications with sensitive and/or actionable content. As pertaining to corporate content dissemination, it is common that many such communications may be subject to strict regulations (e.g., in the United States, the European Union, and the United Kingdom), because they can be used to inform decisions regarding securities trading, commodities trading, and/or other investment activities.

To facilitate electronically stored content dissemination, it has become a practice for many companies having investors (particularly public companies) to engage the services of an entity having capability to reliably transmit electronic content to numerous client computers (be they computers of existing or potential investors, regulators, analysts or otherwise) and thus serve as a "content provider" to such client computers. As a content provider to multiple clients through their computers, it can be important for assuring a high quality reputation, that these disclosures by way of electronic information are securely delivered "simultaneously" to the various client computers to ensure compliance with legal regulations (e.g., United States Securities and Exchange Commission's (SEC) Fair Disclosure (Reg FD), European Union's Market Abuse Regulation (MAR), and United Kingdom's Disclosure and Transparency Rules (DTR)) and contractual obligations, and so that one or more clients do not attain an advantage over another client due to, for example, receiving electronically stored content before another.

In the context of modern trading scenarios, it is common that corporate content dissemination by a content provider will take place using a computer network, and particularly the Internet. Though Internet access is now global, there remain technological challenges with achieving simultaneous secure delivery of electronically stored content to all potential client computers. Historically, achievement of simultaneity of secure delivery has been hindered due to different geographical locations and varying computing capabilities of client computers and their respective networks. It has been common that, due to technological factors such as network system latency, computer processing capabilities, and/or data transmission lags, a discrepancy in delivery times among multiple client computers (located remotely relative to each other (and relative to a content provider)) of seconds or even minutes has been experienced.

Efforts to address a need for contemporaneous secure delivery of electronically stored content to multiple different recipients have been advanced by others. Examples of these efforts include those described in U.S. Patent Publ. No. 2022/0104010; U.S. Patent No. 9,313,531; U.S. Patent No. 9,591,043; U.S. Patent No. 8,738,798; and U.S. Patent No. 7,069,245, all of which are incorporated by reference in their entirety for all purposes. Despite these efforts, there remains a need for a robust method, system, and software for overcoming technological problems associated with simultaneous secure delivery of decrypted electronic content to multiple client computers.

SUMMARY

The present description illustrates a technological solution to the above-described problem of discrepancy in delivery times among multiple client computers (located remotely relative to each other (and relative to a content provider)) due to factors including but not limited to different geographical locations and varying computing capabilities of client computers and their respective networks. Specifically, the present description illustrates an improved and robust method, system, and software for providing simultaneous secure delivery of decrypted electronically stored content to a plurality of client computers that are located remotely relative to one another and are located remotely relative to a computing system operated by or under the control of a content provider (e.g., a coordination system) referred to herein as a "content delivery engine" ("CDE").

In one general sense, the present description addresses a method (and associated system and software) of providing simultaneous secure delivery of decrypted electronically stored content to remotely located client computers via an electronic communication network. The method includes acquiring operating variable information about the client computers; calculating a release time (e.g., using one or more particular unconventional rules that adjust for potential sources of delivery delay) when decryption is enabled for each client computer to start decrypting a first byte of a set of encrypted electronic content units obtained by such client computer; and transmitting computer-executable instructions to begin decryption at the release time so that each client computer is securely delivered decrypted content simultaneously.

With somewhat more particularity, the method, system, and software involve use of an electronic communication network (e.g., the Internet) employing a plurality of computers. To overcome technological challenges owing to time needed for data transmission, decryption, and other obstacles encountered in the secure transmission of electronically stored content to multiple client computers, the subject of the present description provides a technological solution by making advantageous use of a unique and unconventional approach to enable multiple client computers to simultaneously initiate decryption of content regardless of network traffic, computing capabilities of the respective client computers, and/or other latencies present. In brief, the present description addresses a method, a system using such method, and software configured with computer-executable instructions to perform the method, by which a release time is calculated (namely, using one or more unconventional rules that take into account at least information about network latency and individual client computing capabilities) and is communicated to the client computers at which release time at least one computer associated with each client will commence decryption of the content.

In more detail, the method of the present description may include the steps (e.g., steps performed by a content delivery engine ("CDE") computer) of: (a) transmitting computer-executable instructions to each client computer for obtaining encrypted content (e.g., a downloadable and storable set of encrypted electronic content units); (b) transmitting to each client computer a decryption key that is configured to decrypt the encrypted content (e.g., the set of encrypted electronic content units); (c) acquiring operating variable information about a plurality of client computers (preferably, each client computer); (d) establishing an orchestration time standard to synchronize all client computers with a computer of the CDE computer (e.g., a coordinator computer, referred to also as coordinator, operated or under the control of the CDE computer); (e) calculating a release time (preferably using the orchestration time standard), using the operating variable information, when decryption is enabled for each client computer to start decrypting (and preferably writing) a first byte of the encrypted content (e.g., the set of encrypted electronic content units); and (f) transmitting computer-executable instructions to each client computer to begin decryption using the decryption key at the release time so that each client computer securely delivers decrypted content simultaneously. The acquiring operating variable information step (c) may include acquiring information about latency of any hardware used by each client computer, proximity between each client computer and a Network Time Protocol (NTP) computer, and proximity between the CDE computer (e.g., the coordinator computer operated or under the control of the CDE computer) and each client computer. Calculating a release time may employ at least one rule that is based upon the operative variable information acquired from the client computers, and the method may include sending concurrently to each client computer a package of information that includes the calculated release time and the decryption key. The method of the present description as a whole may contribute to the technological solution; but by virtue of at least the steps of acquiring operating variable information, establishing an orchestration time standard, calculating a release time, and transmitting computer-executable instructions to each client computer, as described herein, when used alone or in combination with the steps of transmitting computer-executable instructions to each client computer and transmitting to each client computer a decryption key; an unconventional approach that addresses the technical problem (e.g., discrepancy in delivery times among multiple client computers (located remotely relative to each other (and relative to a content provider)) due to factors including but not limited to different geographical locations and varying computing capabilities of client computers and their respective networks) and accounts for the technical problem in a unique way is realized.

The system of the present description includes a plurality of computers (e.g., multiple computers each associated with a different client and also with a content delivery engine ("CDE") located remotely from each other, an electronic communication network (wired and/or wireless), and at least one non-transitory computer-readable data storage medium (preferably at least one cloud storage medium ("CSM")) having electronically stored content thereon. At least one computer is programmed to perform the steps of the method of the present description and thereby cause the electronically stored content to be transmitted to the plurality of computers in encrypted form to be decrypted by a decryption key and to have a first byte downloadable simultaneously across the plurality of computers.

Software of the present description includes computer-executable instructions (preferably residing on a non-transitory computer-readable storage medium) for performing the method of the present description.

Various additional concepts of the present description are described elsewhere herein.

BRIEF DESCRIPTION OF THE DRAWINGS

Fig. 1 is a flow diagram illustrating the steps of the method in accordance with concepts of the present description, according to an exemplary embodiment.

Fig. 2 is a schematic diagram illustrating a system according to concepts of the present description, according to an exemplary embodiment.

Fig. 3 is another flow diagram illustrating the steps of the method in accordance with concepts of the present description, according to an exemplary embodiment.

Figs. 4A-4B is another flow diagram illustrating the steps of the method in accordance with concepts of the present description, according to an exemplary embodiment.

DETAILED DESCRIPTION

The present description explains a robust method, system, and software for providing simultaneous secure delivery of decrypted electronically stored content to a plurality of remotely located client computers. In general, the method, system and software involve use of an electronic communication network (e.g., the Internet) employing at least one computer in networking communication with a plurality of remotely located client computers. The method, system and software involve use of a series of steps performed in a manner such that simultaneous secure delivery (e.g., by a CDE computer) of decrypted electronically stored content is realized. It is possible from the use of the method, system, and software that multiple client computers remotely located relative to each other and relative to a content provider can execute a download of a first byte of the decrypted electronically stored content no greater than two seconds apart from one another.

In one broad sense the present description is directed toward a method (and associated system and software) of providing simultaneous secure delivery of decrypted electronically stored content to remotely located client computers via an electronic communication network. The method includes acquiring operating variable information about the client computers; calculating a release time using the operating variable information, when decryption is enabled for each client computer to start decrypting (and preferably writing) a first byte of a set of encrypted electronic content units obtained by such client computer; and transmitting computer-executable instructions to each client computer to begin decryption at the release time so that each client computer is securely delivered decrypted content simultaneously. Calculating a release time may employ at least one rule that is based upon the operative variable information acquired from the client computers.

The present description employs a number of steps (e.g., steps performed by at least one CDE computer), which may include (for example) a step of transmitting computer-executable instructions to each of a plurality of client computers (e.g., remotely located client computers) for obtaining a downloadable and storable set of encrypted electronic content units.

The steps may include a step of transmitting to each client computer a decryption key that is configured to decrypt the set of encrypted electronic content units.

The steps may include acquiring operating variable information about a plurality of client computers (preferably, each client computer) including latency of any hardware used by each client computer, proximity between each client computer and a Network Time Protocol (NTP) computer, and proximity between a CDE computer (e.g., a coordinator computer) and each client computer.

The steps may include establishing an orchestration time standard to synchronize all client computers with a computer of the CDE computer (e.g., a coordinator computer operated or under the control of the CDE computer). The orchestration time standard may be an established time standard (e.g., Coordinated Universal Time ("UTC"), International Atomic Time (TAI), or Unix time). It may be another standard, such as a standard set by the CDE computer.

The steps may include calculating a release time. It is possible that the release time calculation will be expressed as a specific amount of time; for example, it may be an amount of time in the future. The release time may be a time that is expressed as an addition to some known time, such as a time when the calculation of the release time is completed. The time when the calculation of the release time is completed may be based on any time standard. It may be based on the orchestration time standard. For example, if the release time is calculated to be X milliseconds and the orchestration time standard shows the time to be Y, then the instructions for beginning decryption (and thus writing) will be time = Y plus the additional amount of calculated time X. In this instance, therefore, the release time would be a specific moment in time on the timeline of the orchestration time standard. The orchestration time standard shows the time to be Y when the calculation has been completed, then the instructions would be Y, the time on the orchestration time standard, plus the time in the future from the release time calculation. In this manner, each client computer is thus able to decrypt and/or write its first byte of decrypted content. In the description herein, unless otherwise stated, it should be understood that any decrypting of encrypted content also contemplates writing of the decrypted content (e.g., storing the decrypted content).

The steps may include transmitting computer-executable instructions to each client computer to begin decrypting (and thus writing) using the decryption key at the release time so that each client computer securely delivers decrypted content simultaneously.

In general, the steps associated with the method, system, and software of the present description are controlled by a content provider or other CDE. The content provider or CDE may, in turn, act by way of a coordinator. There may be a computer associated with the CDE, which may be operated by and/or under the control of the CDE. Any computer used by the CDE to execute any of the described method steps and/or the described software may be operated by or under the control of the CDE or a third party and can be regarded as a "CDE computer." The term "computer," as referenced herein, includes, *inter alia,* a processor, at least one non-transitory storage medium, and may further contain software for causing the processor to execute operations according to instructions. A computer may be part of a personal computer, a portable electronic device (e.g., smartphone), a server (e.g., enterprise server, cloud server, or otherwise), or other computing instrument. The term computer also contemplates a cloud server, which may include a plurality of individual computers. For example, a cloud server may include a plurality of individual computers working in concert with one another. Any of the computers herein may also be configured so that its at least one non-transitory storage medium can store at least one database.

"Simultaneous secure delivery," as contemplated in the context of a time within the description herein means a delivery to all of the plurality of remotely located client computers within a span of less than two seconds, preferably less than one second, preferably less than 500 milliseconds, even still more preferably less than 200 milliseconds, less than 100 milliseconds, less than 50 milliseconds, less than 10 milliseconds, or even less than 5 milliseconds.

By "remotely located" it is meant that the client computers are at different geographic locations relative to each other, and relative to the CDE computer, and the client computers are spaced from each other by a distance of at least 2 meters, 5 meters, 25 meters, 100 meters, 1 kilometer, or more. By "secure delivery," it is meant that the electronically stored content, having been provided in an encrypted form, is decrypted and available for download by the client computer.

The electronic communication network may be a wide area network (WAN) such as the Internet. However, the electronic communication network may also be embodied as a local area network (LAN), or any other network able to transfer information. Preferably the network is the Internet. The network may include a virtual private network (VPN).

The electronically stored content may be stored in one or more non-transitory computer-readable storage medium. By way of example, a suitable storage medium may be a cloud-based storage platform. It may also be a storage medium associated with one or more other computers that form part of the network. It may be a medium associated with a RAM, a ROM, an EEPROM, an HDD, a buffer provided in a processor, or any combination thereof. A non-transitory medium may include some other media such as a CD-ROM, DVD-ROM. A storage medium may also be a portable storage medium, such as a USB drive.

Any such non-transitory computer-readable storage medium may be part of or otherwise associated with a computer processor, a network computer, or other computing system. The computer processor may include, but is not limited to, one or more computing devices configured to execute one or more software programs configured to perform one or more functions. Further, the network computer may function to facilitate connection between the electronic communication network and the computer processor. The computer processor and the network computer may be connected to a power source unit and/or power distribution unit.

Each of the client computers and the CDE computer may be configured to connect to the electronic communication network (via a wireless or wired connection) and may include at least one computer processor. The computer processor may include, but is not limited to, one or more computing devices configured to execute one or more software programs configured to perform one or more functions. The one or more computing devices may include at least a transmission processor which is configured to measure transmission time of electronically stored content including processor executable download instructions, encrypted electronic content units, and/or a decryption key. The client computers and the CDE computer may be connected to a power source unit and/or power distribution unit.

Turning now to the step of transmitting computer-executable instructions to each of a plurality of client computers (e.g., remotely located client computers) for obtaining a downloadable and storable set of encrypted electronic content units, it is contemplated that the downloadable and storable set of encrypted electronic content units may include data for providing text, images, audio, and/or video. Preferably, the data includes at least text and may also include one or more forms of electronically stored information selected from images, audio, and/or video. The data size may be less than 100 megabytes, less than 50 megabytes, less than 20 megabytes, less than 10 megabytes, less than 5 megabytes, less than 2 megabytes, less than 1 megabyte, or less than 0.5 megabytes.

By way of example, the set of encrypted electronic content units may include content relating to corporate announcements. For example, the set of encrypted electronic content units may include content selected from the group consisting of press releases, annual earnings statements, quarterly reports, product launches, financial reports, dividend announcements, debt issuance, stock issuance, stock buybacks, corporate sales or acquisition announcements, or any combination thereof. Further, the set of encrypted electronic content units may include a regulated communication and/or a communication by a regulated publicly traded entity, such as a communication and/or entity that is regulated by the United States Securities and Exchange Commission.

It is envisioned that the description herein is directed toward secure delivery and receipt of an entire announcement. That is, an announcement may include several discrete components. By way of illustration, in the context of a corporate announcement, the announcement may include (in electronic form) addressee and sender content, narrative text content, financial numerical content in support of the text content, and image content such as a logo, a table, or otherwise; each of the content categories being a "unit," and the entire announcement collectively being the set of encrypted electronic content units. Thus, it is possible that the secure delivery of a downloadable and storable set of encrypted electronic content units will result in secure delivery of electronically stored content for an entire announcement, without breaking the announcement into components or blocks of data.

Regarding the delivery of a downloadable and storable set of encrypted electronic content units, the teachings envision that it may involve a direct and/or indirect delivery of one or more files to a client computer. For example, a CDE computer may cause (e.g., via a coordinator) the delivery of the downloadable and storable set of encrypted electronic content units directly to each client computer (e.g., by transmitting a complete encrypted file). Alternatively, the CDE computer may cause (e.g., via a coordinator) the delivery to a client computer of an address or other suitable information from which the client computer can download, from a non-transitory computer-readable storage medium, the downloadable and storable set of encrypted electronic content units. This latter scenario could be a scenario in which a computer maintains in storage the downloadable and storable set of encrypted electronic content units.

In regard now to the step of delivering a decryption key that is configured to decrypt the set of encrypted electronic content units, the teachings envision that it may involve a direct and/or indirect delivery of one or more files to a client computer. For example, a CDE computer may cause (e.g., via a coordinator) the delivery of the downloadable and storable decryption key directly to each client computer (e.g., by transmitting a decrypted file). Alternatively, the CDE computer may cause (e.g., via a coordinator) the delivery to a client computer of an address or other suitable information from which the client computer can download, from a non-transitory computer-readable storage medium, the downloadable and storable decryption key. This latter scenario could be a scenario in which a computer maintains in storage the downloadable and storable decryption key. Depending upon the size of the decryption key, it may be delivered in one or more distinct transmissions of data.

As to the timing of when the decryption key transmission step occurs relative to the transmission of instructions to download the set of encrypted electronic content units ("the transmitting computer-executable download instructions step"), it is envisioned that the transmitting computer-executable download instructions step may be performed concurrently with the step of transmitting of a decryption key to each client computer (e.g., by the CDE computer or the coordinator). It is also possible that the transmitting computer-executable download instructions step may be performed consecutively with the step of transmitting to each client computer a decryption key step. Thus, it is possible that the computer-executable download instructions may arrive at a client computer before a decryption key arrives and/or it is possible that the computer-executable download instructions may arrive at a client computer after a decryption key arrives; i.e., a difference in time between arrival of the computer-executable download instructions and decryption key may be more than 3 seconds, 5 seconds, 10 seconds, 30 seconds, one minute, ten minutes, thirty minutes, one hour, 12 hours or longer. It is possible that the computer-executable download instructions may arrive at a client computer no more than two seconds before or after the arrival of the decryption key, preferably less than one second, preferably less than 500 milliseconds, even still more preferably less than 200 milliseconds, less than 100 milliseconds, less than 50 milliseconds, less than 10 milliseconds, or even less than 5 milliseconds. It is thus possible that the CDE computer will be provided with a set of electronically stored content units with a request by an entity to release the content at a time in the future.

If the CDE computer is provided with the set of content in an encrypted form, and is provided also with a decryption key, the CDE computer may thus transmit to client computers the computer-executable download instructions and later send the decryption key, transmit the computer-executable download instructions after sending the decryption key, or do both at the same time. Of course, it is also possible that the CDE computer may be provided with the set of electronically stored content units in unencrypted form and the CDE computer may first encrypt the set and create a decryption key before sending to the client computers.

With attention now to the step of acquiring operating variable information about a plurality of client computers (e.g., each client computer), it is desired to obtain information about likely sources of contribution to lag in performance of the system. To this end, it is recognized that there is a need for knowing operating variable information about client computers (e.g., each client computer) including latency of any hardware used by each client computer, proximity between each client computer and a Network Time Protocol (NTP) computer, and proximity between a CDE computer (e.g., a coordinator computer) and each client computer.

The present description envisions that such step of acquiring operating variable information may be performed at least once. In a preferred embodiment, the step of acquiring operating variable information may be performed repeatedly to obtain multiple data points for each variable. Preferably, the acquiring operating variable information may be repeated at least 3 times, even more preferably at least 5 times, even still more preferably at least 10, at least 20, or at least 50, 100, or at least 1000 times. For each variable, the multiple data points may be averaged to determine the operating variable information. As to this step, it is also possible that acquired operating variable information is stored and thereafter retrieved and used for future calculations. For example, acquired operating variable information is stored and thereafter retrieved and used for future calculations for secure delivery of a different set of electronically stored content units to a particular client computer or group of client computers.

In this regard, one of the solutions envisioned by the present description is premised upon the recognition that one or more client computers are spaced from a common time reference (e.g., International Atomic Time (TAI), Coordinated Universal Time ("UTC"), or Unix time) by one or more layers of computers. As a result, there is a potential for latency due to the intermediate layers. The concepts of the present description make use of the recognition that such intermediate layer latency may be of a sufficient magnitude that instructions to make content downloadable at a predetermined time may result in a lag in downloading amongst multiple client computers.

To assess the potential impact of this latency, the concepts of the present description make use of a variety of unconventional steps to provide a unique technological improvement. One such step may include determining latency of individual client computers relative to an NTP computer of that client computer. This step also may be employed to establish an orchestration time standard (as will be discussed). The present teachings envision multiple ways to determine latency of individual client computers relative to an NTP computer of that client computer. In an exemplary embodiment, the CDE computer may instruct each client computer to communicate with a designated NTP computer (preferably at least 10 times, even more preferably at least 50 times, and even more preferably at least 100 times). In another exemplary embodiment, the client computer may be continuously communicating with a designated NTP computer without receiving instructions from the CDE computer. For either of these exemplary embodiments, each client computer may communicate information to the CDE computer about its latency relative to a designated NTP computer. In an exemplary embodiment, a client computer may keep a log of its latency relative to its designated NTP computer and may send the NTP latency information to the CDE computer.

Another operating variable that is contemplated by the present description may be network latency. Accordingly, it is recognized that this can be addressed by obtaining information about network latency by measuring round trip time (RTT). By way of illustration, one way to assess the latency is for the CDE computer to cause one or a series of communications and RTT measurements to be made with multiple client computers. The CDE computer may cause one or a series of communications and RTT measurements to be made for a first client computer, in order to ascertain the latency of the first client computer relative to the CDE computer. In particular, it is desired to perform a series of communications and RTT measurements with such first client computer and to determine therefrom an average latency for that first client computer. The CDE computer may also to cause one or a series of communications and time measurements to be made with a second client computer, in order to ascertain the latency of the second client computer relative to the CDE computer. As with the first client computer, it may be desired to perform a series of communications and RTT measurements with such second client computer and to determine therefrom an average latency for that second client computer. This may be repeated for other client computers also. It may be repeated for each of the other client computers or only some of the other client computers. On the basis of the RTT measurements obtained, one of the concepts of the present description contemplates identifying a maximum RTT ($RTT_{max}$) observed for all RTT measurements (e.g., across some (e.g., a random sampling) or all client computers in the network).

The method may also include a step of the CDE computer (e.g., coordinator) receiving a notification from at least one of the client computers that such client computer has downloaded the set of encrypted electronic content units and/or has downloaded the decryption key. For example, the method may also include a step of the CDE computer logging a Round-Trip Time (RTT) that elapsed from the time between the initiation of the transmitting computer-executable download instructions step (a) and/or the transmitting a decryption key step (b) and the time when such notification is received by the CDE (e.g., a coordinator). This RTT may be inputted into the second formula (below) to calculate the $RTT_{max}$.

Yet a further operating variable for which the present description envisions gathering information is the individual digital processing capabilities of a plurality of (e.g., each of) respective client computers. The processing will typically include decrypting an encrypted communication and transmitting a signal to the CDE computer (e.g., coordinator). By way of illustration, one way to assess the impact of this processing latency is for the CDE computer to cause one or a series of communications and processing time measurements to be made with multiple client computers.

The CDE computer may cause one or a series of encrypted communications and time measurements to be made for a first client computer, to ascertain the time taken by the first client computer to decrypt the communication into a state that it can then be downloaded. In particular, it is desired to perform a series of encrypted communications and processing time measurements with such first client computer and to determine therefrom an average processing time for that first client computer. The CDE computer may also cause one or a series of communications and processing time measurements to be made with a second client computer, to ascertain the processing time of the second client computer. As with the first client computer, it may be desired to perform a series of communications and processing measurements with such second client computer and to determine therefrom an average latency for that second client computer. This may be repeated for other client computers also. It may be repeated for each of the other client computers or only some of the other client computers. Based on the processing time measurements obtained, the concepts of the present description include in the calculation a variable representative of the processing time data collected. In a preferred approach, the variable may be correlated with a maximum processing time $\tau_{max}$ observed amongst multiple processing time measurements across the network of client computers (e.g., across some (e.g., a random sampling) or all client computers in the network).

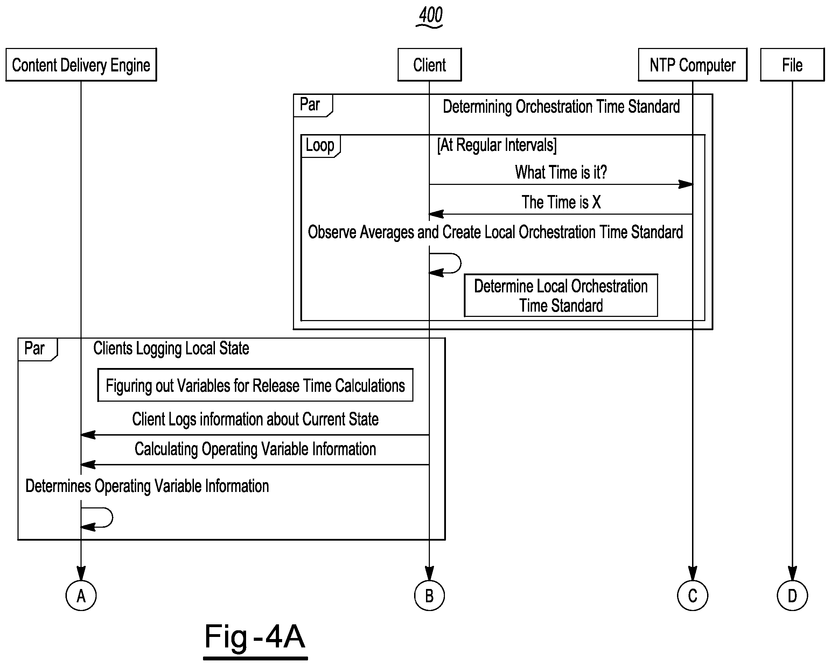

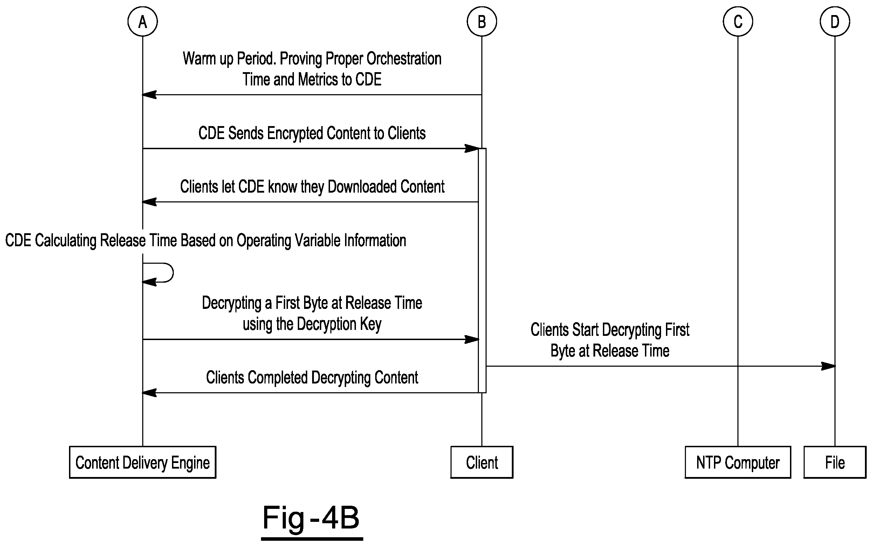

As indicated, there may be employed an unconventional step of establishing an orchestration time standard in reference to which synchronization of computers across a network is realized. The orchestration time standard may be synchronized with a common time reference (e.g., International Atomic Time (TAI), Coordinated Universal Time ("UTC"), or Unix time) whose information is provided by NTP computers. The CDE computer or coordinator may communicate with a NTP computer to synchronize with the orchestration time standard. The CDE computer or coordinator may instruct each client computer to communicate with a designated NTP computer so that each client computer may synchronize its local time with the orchestration time standard, and therefore, synchronize its local time with the CDE computer or coordinator. Specifically, and also as described later relative to Figs. 4A-4B, the NTP computer may receive a client computer request. The time of the request and/or the time of receipt by the client computer may be determined and logged (e.g., time as indicated by the NTP computer). For example, a round trip time between the client computer and the NTP computer is determined and logged. The client computer may then compute a network delay occasioned by the distance of the client computer from the NTP computer. This can be, for instance, determined by halving the RTT, round trip time between the client computer and the NTP computer, assuming symmetric delay, namely, that the time taken to send the request is roughly equal to the time taken to receive the response. The client computer may then calculate the offset between its local time and the time specified by the NTP computer time. For example, if the NTP computer time is ahead of the client computer local time by 50 milliseconds, and the round trip time between the client computer and the NTP computer is 20 milliseconds, the client computer would adjust its local time by 40 milliseconds (50 milliseconds minus 10 milliseconds, with 10 milliseconds being half the RTT). This adjustment may thus help to ensure that the client computer local time is synchronized as closely as possible with the orchestration time standard that is provided by the previously described steps of polling the NTP computer. This adjustment may be applied gradually as an average over time to avoid sudden jumps in the local time, which could disrupt ongoing operations. Each client computer may repeatedly communicate with its designated NTP computer at regular intervals in order to synchronize its local time with the orchestration time standard. The regular intervals may occur every 10 seconds, preferably every 5 seconds, still more preferably every 1 second, even still more preferably every 500, 100, 10, 5, or 1 millisecond. It is desired for the client computer to perform a series of communications with the NTP computer to determine averages to synchronize its local time with the orchestration time standard. If the NTP computer stops functioning, then the client computers may temporarily pause providing simultaneous secure content delivery. When the NTP computer resumes functioning properly, the client computers may resume providing simultaneous secure content delivery.

Turning now to the step of calculating a release time (i.e., the time when a first byte of the encrypted electronic content units is decrypted by a client computer), the concepts herein are facilitated by a step of performing such a calculation that takes into account the previously described operating variables. The step of calculating a release time preferably involves performing a release time calculation that takes into account the operating variables (which may be current and/or historical information). As the following explains, calculating a release time may employ at least one rule that is based upon the operative variable information acquired from the client computers. In one sense, calculating a release time involves determining (e.g., using one or more unconventional rules) using a pre-determined standard time, an adjustment of time that is added to or subtracted from the standard time. For example, the orchestration time standard as described herein may be employed as the predetermined standard time.

In regard to the step of calculating a release time, in particular, one rule is to take into account the longest time of any of the client computers in the network using a common time reference. For instance, this rule may including obtaining information about a variable by determining the longest time of any of the client computers in the network using a common time reference ("$t_{ack,max}$"), such as an atomic time clock. In this regard, one of the solutions envisioned by the present description is premised upon the recognition that one or more client computers are spaced from a common time reference (e.g., International Atomic Time (TAI) or some other time standard) by one or more layers of computers. As a result, there is a potential for latency due to the intermediate layers. The concepts of the present description make use of the recognition that such intermediate layer latency may be of a sufficient magnitude that instructions to make content downloadable at a predetermined time may result in a lag in downloading amongst multiple client computers.

For calculating the release time, another rule is to take into account the maximum round trip time over the network for all client computers relative to the CDE computer. For instance, this rule may include obtaining information about the maximum RTT over all client computers ($RTT_{max}$). On the basis of the processing time measurements obtained when obtaining operating variable information, for purposes of calculating release time, the concepts of the present description include in the calculation a variable representative of the processing time data collected. In a preferred approach, the variable included is the maximum processing time $\tau_{max}$ observed for all processing time measurements.

Further, for calculating release time, another rule may be to take into account system past performance. For instance, the concepts of the present description envision that calculating the release time may include accounting for a "safety margin" ($\delta$) based upon past performance. Past performance could include past network performance, past client computer processing performance, and/or any other variable that has contributed in any significant way to a departure from simultaneous secure delivery performance of the present method, system, and software. Thus, the concepts herein envision that data may be accumulated, stored, and retrieved for analysis over one or more periods of time (e.g., daily, weekly monthly, annually, etc.). Safety margin thus could be indicative of, and used to take into account for, deviations of performance between actual performance and ideal performance (i.e., the performance to be expected under conditions that account for RTT and client computer processing capabilities). The safety margin may vary over time. Values employed for safety margin may be less than 40 milliseconds (e.g., 30 milliseconds or less, more preferably 20 milliseconds or less, more preferably 10 milliseconds or less, and still more preferably 5 milliseconds or less). Safety margin values preferably will be at least 0.01 milliseconds, more preferably will be at least 0.1 milliseconds, and still more preferably be at least 1 millisecond.

As described above, in an exemplary embodiment, the release time may be the same for one or more client computers. In other words, a single release time calculation may be performed for all client computers using data acquired across a plurality of client computers (e.g., all client computers). The release time may be communicated to each client computer by the CDE computer. The release time may indicate a time at which all client computers can begin decryption using the decryption key so that each client computer can securely acquire decrypted content simultaneously. Calculating a release time for all client computers according to the present method may provide advantages such as systematically mitigating discrepancies caused by network delays and time skews to ensure uniformity in secure release of decrypted electronic content regardless of location or network condition. In other words, all client computers may decrypt and securely release decrypted electronic content simultaneously, therefore eliminating discrepancies caused by local time skew, local computational disruptions, and/or network latency.

The release time may be a calculated amount of time (e.g., milliseconds) in the future at which each client computer may decrypt (and thus write) its first byte of content. The release time may be a time amount determined in accordance with one or more (preferably all) of the unconventional rules described herein, such as rules that account for previously discussed variables including location of a client computer relative to an NTP computer, network latency, and client computer processing capability. The release time may be an amount of time that accounts for past performance as discussed previously.

More specifically, it should be understood that the release time that is provided with decryption instructions to client computers is a time that has been calculated according to the description herein and will reflect a calculated time. By way of example, the release time may be a calculated amount of time (e.g., milliseconds) in the future at which each client computer may decrypt (and thus write) its first byte of content. The CDE computer may add the release time to the current time (e.g., expressed using a uniform time standard such as the orchestration time standard) so that each client computer receives the exact time (e.g., expressed using a uniform time standard such as the orchestration time standard) that it is to start decrypting (and thus writing) its first byte of content. The release time calculation may be performed at a predetermined time designated by the CDE computer, a customer of the CDE computer services, or both. For example, the predetermined time may be a time in the future that is designated by a user of the CDE computer, such as a corporation issuing a report. In a general sense, as has been discussed, the release time will be a calculated time that accounts for variables indicative of (i) location of a client computer relative to an NTP computer, (ii) network latency, and (iii) client computer processing capability, and an optional safety margin.

In regard to the specific operating variable information acquired, it may be used in the calculation of the release time adjustment. In this regard, there may be a unique rule established for release time adjustment. In particular, the release time ($t_{release\ time}$) may be calculated by at least one unique rule that employs a first formula:

$$t_{release\ time} = t_{ack,max} + \frac{RTT_{max}}{2} + \delta + \tau_{max}$$

The parameter $RTT_{max}$ may be a maximum time, from among a plurality of (e.g., all of the client computers), to send a message from the client computer to the CDE computer (e.g., a coordinator) back to the client computer. The parameter $RTT_{max}$ may be calculated by another unique rule that employs a second formula (where n represents the number of client computers from which the RTT variable is obtained):

$$RTT_{max} = \max(RTT_1, RTT_2, ..., RTT_n)$$

The parameter $t_{ack,max}$ may be a maximum time, from among all of the analyzed client computers (e.g., all of the client computers in the network), for the client computer to acknowledge a communication from the NTP computer. The parameter $t_{ack,max}$ may be calculated by a further unique rule that employs a third formula (where n represents the number of client computers):

$$t_{ack,max} = \max(t_{ack,1}, t_{ack,2}, \dots, t_{ack,n})$$

The parameter $\delta$ may be a safety margin. For example, it may be a value for time that is derived from stored historical data of variance in performance of the network and computational delays of each client computer or a group of client computers. It may be derived from an average of a collection of numerous data time values accumulated from past performance.

The parameter $\tau_{max}$ may be a maximum expected time, from among all of the client computers, for the client computer to decrypt and process the encrypted electronic content units. The parameter $\tau_{max}$ may be computed with yet a further unique rule that employs a fourth formula (where n represents the number of client computers analyzed (e.g., all or a random sampling of the client computers in the network):

$$\tau_{max} = \max(\tau_1, \tau_2, \dots, \tau_n)$$

The present teachings envision that one or more of the variables in the above formulas may be removed or replaced while still preserving performance reliability. For example, the first formula may not include the safety margin, $t_{ack,max}$, and/or $\tau_{max}$. This may be the case in instances when the values are below a certain threshold such that the performance of the overall system is not materially altered. For example, if the values to be employed for safety margin, $t_{ack,max}$, and/or $\tau_{max}$ are lower than a certain number of milliseconds, then it is possible they may be regarded as negligible overall.

In regard to the above description, including in regard to the calculation, the total number of client computers may be greater than 2 and up to 10, or greater than 10 and up to 100, or greater than 100 and up to 1000, or greater than 1000 and up to 10,000. Numbers of client computers greater than 10,000 is also possible.

As discussed previously, it is possible to employ a single reference time standard against which a common release time for all client computers may be determined. The calculation may use a series of data points acquired over time as inputs to the calculation. It will be understood that the concepts of the present description also envision that any of the operating variable information, orchestration times, and/or calculated release times obtained while performing the method of the present description for one set of electronically stored units (e.g., a corporate announcement at a first time), may also be stored on a non-transitory computer-readable storage medium, for future reference or use in performing the method for another set of electronically stored content units (e.g., a different corporate announcement at a time later than the first time. As mentioned above, for example, some of the information may be employed to ascertain the safety margin.

The teachings envision that a new client computer may undergo a warmup period to prove proper orchestration time standard synchronization and other metrics to the CDE computer. For example, during the warmup period, the new client computer may calibrate its $RTT_{max}$, $t_{ack,max}$, and $\tau_{max}$ with the other existing client computers using test electronic content units. Once the new client computer's $RTT_{max}$, $t_{ack,max}$, and $\tau_{max}$ values stabilize, the new client computer may join the existing client computers in providing simultaneous secure content delivery. By way of example, stabilized values may be values for each variable that are within +/- 100 milliseconds of each other, preferably +/- 10 milliseconds of each other, and even more preferably +/- 5 (or even 1) millisecond of each other.

The teachings also envision that a client computer may stop providing simultaneous secure content delivery if the values of $RTT_{max}$ and $\tau_{max}$ associated with such client computer are beyond an established threshold.

By way of example, a threshold value for $RTT_{max}$ may be less than 500 milliseconds, more preferably less than 250 milliseconds, still more preferably less than 100 milliseconds. A threshold value for $RTT_{max}$ may be more than 0.5 milliseconds, more preferably more than 1 millisecond, and still more preferably more than 10 milliseconds.

By way of example, a threshold value for $\tau_{max}$ may be less than 3000 milliseconds, more preferably less than 2500 milliseconds, still more preferably less than 2000 milliseconds. A threshold value for $\tau_{max}$ may be more than 5 milliseconds, more preferably more than 10 milliseconds, and still more preferably more than 50 milliseconds. The value for the safety margin may be less than 500 milliseconds, preferably less than 250 milliseconds, more preferably less than 100 milliseconds. The value for safety margin may be 0, more than 5 milliseconds, more than 10 milliseconds, or more than 20 milliseconds.

In regard to the transmitting computer-executable instructions to each client computer to begin decryption using the decryption key at the release time step, the teachings envision that it may involve a direct and/or indirect delivery of one or more files to a client computer. For example, a CDE computer may cause (e.g., via a coordinator) the delivery of the downloadable and storable computer-executable decryption instructions directly to each client computer (e.g., by transmitting a decrypted file). Alternatively, the CDE computer may cause (e.g., via a coordinator) the delivery to a client computer of an address or other suitable information from which the client computer can download, from a non-transitory computer-readable storage medium, the downloadable and storable computer-executable decryption instructions. This latter scenario could be a scenario in which a computer maintains in storage the downloadable and storable computer-executable decryption instructions. In a preferred embodiment, since all of the client computers and the CDE computer may be using the orchestration time standard, it may be ensured that the beginning of decryption (e.g., decrypting a first byte of the encrypted electronic content units) at the release time is simultaneous among all client computers.

As further gleaned from the above, the various steps of the described method can be performed in different sequences. For example, the step of transmitting computer-executable instructions to each client computer to begin decryption using the decryption key at the release time may be performed concurrently with the step of transmitting computer-executable instructions for obtaining encrypted content to each client computer and/or the step of transmitting to each client computer a decryption key. The present description envisions that the step of transmitting to each client computer a decryption key and the step of transmitting computer-executable instructions to begin decryption using the decryption key at the release time may occur at the same time, and after the step of calculating a release time. For example, in a preferred embodiment, the CDE computer (e.g., coordinator) may send concurrently to each client computer a package of information that includes the calculated release time and the decryption key. The step of transmitting computer-executable instructions to each client computer to begin decryption may be performed consecutively with the step of transmitting computer-executable instructions for obtaining encrypted content and/or the step of transmitting to each client computer a decryption key step. The step of transmitting computer-executable instructions for obtaining encrypted content and the step of transmitting a decryption key may each precede the step of establishing an orchestration time standard. The step of transmitting a decryption key may precede the step of transmitting computer-executable instructions for obtaining encrypted content. The step of transmitting computer-executable instructions to each client computer to begin decryption may occur as its own discrete step after the step of transmitting a decryption key.

The method of the present description may also include a step of logging information about one, more than one, or all of the method steps, preferably by logging the information to an application programming interface (API) maintained by the CDE computer (e.g., coordinator). This step of logging information may be done repeatedly during each step of the method. The information may contain data about one, more than one, or all of the client computers. Information that is logged as contemplated herein can be stored on at least one non-transitory computer-readable storage medium. As discussed previously, for example, the information can be stored and retrieved at a later time to assess performance.

It will be understood that the present description also envisions that any step of the method that includes a client computer securely delivering decrypted content may also include a step of downloading and storing such content on a non-transitory computer readable storage medium. For example, the step of transmitting computer-executable instructions to each client computer to begin decryption using the decryption key at the release time so that each client computer securely delivers decrypted content simultaneously may also result in the client computer and/or the CDE computer downloading and storing the decrypted content.

Among the other concepts of the present description is that the method may be performed in the absence of any request by an agent. For example, the steps of the method may begin as soon as the CDE computer (e.g. coordinator) becomes aware of availability of encrypted content requiring delivery. It is possible also that the method may be performed in response to a request by an entity or its agent (e.g., a computer operated at the request of or upon instruction of a corporate entity) in need of content delivery. For example, the CDE computer may become aware of a new set of encrypted electronic content units via a communication from an entity or its agent. Such communication may instruct the CDE computer to begin the steps of the method. In another example, such communication may instruct the CDE computer to begin the steps of the method at a pre-determined time. In another example, the CDE computer may receive a pre-determined time to begin the steps of the method via a communication from an entity or its agent before a new set of encrypted electronic content units is stored in the non-transitory computer-readable storage medium. The set of encrypted electronic content units may later become available in the non-transitory computer-readable storage medium, and then the CDE computer may begin the steps of the method at the pre-determined time.

As clear from the above, the teachings envision a system configured to perform the method. The system may include at least one CDE computer (e.g., coordinator), at least one client computer, a wired and/or wireless communication pathway enabling signaling communication between the at least one CDE computer and the at least one client computer, and software located on a non-transitory computer-readable storage medium that is configured to perform the steps of the method. The teachings also envision a non-transitory computer-readable storage medium carrying one or more sequences of computer-executable instructions that, when accessed by the CDE computer (e.g., coordinator), causes the CDE computer to perform operations comprising the steps of the method.

Client Computer Perspective

The present teachings have been described from the CDE computer (e.g., coordinator) point of view, but the concepts of the present description also can be understood from a client computer point of view. Under this scenario, the skilled person would understand that steps performed by the CDE computer have been expressed by such terms as "transmitting," "instructing," "calculating," or the like. From the perspective of a client computer, the above steps would be inverted such that a step of "transmitting" by the CDE computer would be a step of receiving when done by the client computer. Thus, a client computer may receive a downloadable set of encrypted electronically stored content units. A client computer may receive a decryption key. A client computer may receive a release time. A client computer may have a computer under its operation or control that causes decryption and/or downloading.

By way of example, the method of providing simultaneous secure content delivery may include a step of downloading the set of encrypted electronic content units. The client computer may directly and/or indirectly receive one or more files from the CDE computer. For example, the client computer may receive directly from the CDE computer the downloadable and storable set of encrypted electronic content units. Alternatively, the client computer may receive an address or other suitable information from which the client computer can download, from a non-transitory computer-readable storage medium, the downloadable and storable set of encrypted electronic content units. The client computer may download and store the set of encrypted electronic content units on a non-transitory computer-readable storage medium. The client computer may download the set of encrypted electronic content units at a single instance so that the units in the set are not parsed or separated.

The method may also include a step of downloading the decryption key. The client computer may directly and/or indirectly receive one or more files from the CDE computer. For example, the client computer may receive directly from the CDE computer the downloadable and storable decryption key. Alternatively, the client computer may receive an address or other suitable information from which the client computer can download, from a non-transitory computer-readable storage medium, the decryption key. The client computer may download and store the decryption key on a non-transitory computer-readable storage medium.

Additionally, the method may include receiving instructions from the CDE computer (e.g., coordinator) to communicate with a designated NTP computer. The client computer may directly and/or indirectly receive one or more files from the CDE computer. For example, the client computer may receive directly from the CDE computer the downloadable and storable instructions to communicate with a designated NTP computer. Alternatively, the client computer may receive an address or other suitable information from which the client computer can download, from a non-transitory computer-readable storage medium, the instructions to communicate with a designated NTP computer. The client computer may download and store the instructions to communicate with a designated NTP computer on a non-transitory computer-readable storage medium.

Further, the method may include locating, over the network, a designated NTP computer. The designated NTP computer may be the NTP computer that is closest in proximity to the client computer. The method may include a step of synchronizing the client computer local time with the time of the designated NTP computer (e.g., establishing the orchestration time standard). Specifically, each client computer may repeatedly communicate with its designated NTP computer at regular intervals in order to synchronize its local time to the orchestration time standard. The regular intervals may be every 10 seconds, preferably every 5 seconds, still more preferably every 1 second, even still more preferably every 500, 100, 10, 5, or 1 millisecond. It is desired for the client computer to perform a series of communications with the NTP computer to determine averages to synchronize its local time to the orchestration time standard. The client computer may log and send NTP latency information to the CDE computer.

The method may also include sending a notification to the CDE computer (e.g., coordinator) that the client computer has downloaded the set of encrypted electronic content units and/or has downloaded the decryption key. The notification may also contain information regarding a current system load of the client computer and/or an estimated processing speed of the client computer.

The method may also include a step of downloading computer-executable instructions to begin decryption using the decryption key at the release time. The client computer may directly and/or indirectly receive one or more files from the CDE computer. For example, the client computer may receive directly from the CDE computer the downloadable and storable computer-executable decryption instructions. Alternatively, the client computer may receive an address or other suitable information from which the client computer can download, from a non-transitory computer-readable storage medium, the computer-executable decryption instructions. The client computer may download and store the computer-executable decryption instructions in its memory.

Further, the method may include a step of decrypting a first byte of the encrypted electronic content units using the decryption key at the release time and securely delivering the decrypted content. In a preferred embodiment, since the client computer and the CDE computer may be using the orchestration time standard, it may be ensured that the beginning of decryption (e.g., decryption of the first byte of the encrypted electronic content units) at the release time is simultaneous among all client computers. The client computer may continue to decrypt the remaining bytes of the encrypted electronic content units using the decryption key. The method may also include a step of sending a notification over the network to the CDE computer (e.g., coordinator) once a last byte of the encrypted electronic content units is decrypted. Such notification may include a first byte time and a last byte time. The first byte time may be the time at which, according to the orchestration time standard, the first byte of encrypted electronic content units was decrypted. Further, the last byte time may be the time at which, according to the orchestration time standard, the last byte of encrypted electronic content units was decrypted.

The steps as described above from the client computer point of view may apply to one, one or more, or all client computers. All other steps described herein as being performed by the CDE computer will have a complementary step performed by a client computer, and all such complementary steps can be expressed, *mutatis mutandis,* as if performed by the client computer (as illustrated earlier in this section).

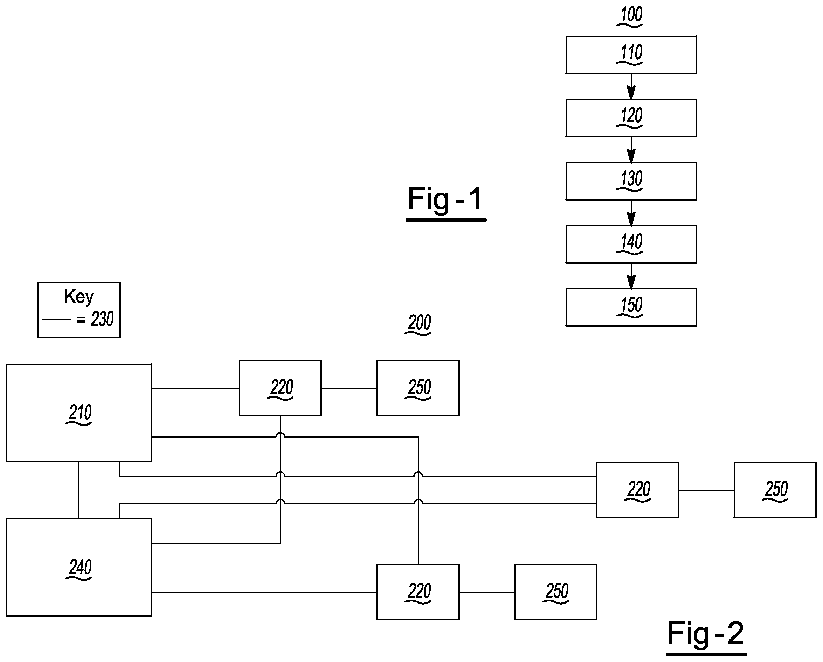

Turning again to more general considerations of the concepts of this description, with reference now to Figs. 1, 2, 3 and 4A-4B, there is depicted a general overview of the system of the present description. Fig. 1 is a flow diagram illustrating the steps of the method 100 according to an exemplary embodiment. Step 110 of the method may include transmitting computer-executable instructions to each client computer for obtaining a downloadable and storable set of encrypted electronic content units. Step 120 of the method may include acquiring operating variable information including: latency of any hardware used by client computers (some or all), proximity between client computers (some or all) and a Network Time Protocol (NTP) computer, and proximity between a CDE computer (e.g., coordinator) and client computers (some or all). Step 130 of the method may include establishing an orchestration time standard to synchronize all client computers with the CDE computer (e.g., coordinator). Step 140 of the method may include calculating a release time (preferably, using the orchestration time standard), using the operating variable information, when decryption is enabled for each client computer to start decrypting (and preferably writing) a first byte of the set of encrypted electronic content units. Step 150 of the method may include transmitting to each client computer a decryption key that is configured to decrypt the set of encrypted electronic content units and transmitting computer-executable instructions to each client computer to begin decryption using the decryption key at the release time so that each client computer securely delivers decrypted content simultaneously. The CDE computer (e.g., coordinator) may send concurrently to each client computer a package of information that includes the calculated release time and the decryption key. This is only an exemplary embodiment and the present teachings envision that the steps of the method may be performed in various orders. Further, steps that are shown and described as being performed consecutively may be performed concurrently, and steps that are shown and described having concurrently performed portions may be instead performed consecutively. For example, step 150 may be split into two different steps: i.) transmitting to each client computer a decryption key that is configured to decrypt the set of encrypted electronic content units; and ii.) transmitting computer-executable instructions to each client computer to begin decryption using the decryption key at the release time so that each client computer securely delivers decrypted content simultaneously.

Fig. 2 is a schematic diagram illustrating a system 200 according to an exemplary embodiment. The system 200 may include a CDE computer 210, at least one client computer 220, an electronic communication network 230, at least one non-transitory computer-readable storage medium 240, and at least one NTP computer 250. The CDE computer 210 may be programmed to perform the steps of the method and thereby cause electronically stored content to be transmitted to the client computers 220 in encrypted form. The client computers 220 may be located remotely from each other, and the NTP computers 250 may communicate only with the client computer 220 to which it is closest in proximity. The CDE computer 210, the client computers 220, the non-transitory computer-readable storage medium 240, and the NTP computers 250 may connect to the electronic communication network 230 via a wireless or wired connection. As depicted in Fig. 2, the lines interconnecting the boxes in the diagram are intended as signal transmission lines which may be wired or wireless. This is only an exemplary embodiment, and the present teachings envision that the system may have additional elements not shown that may connect to the electronic communication network 230.

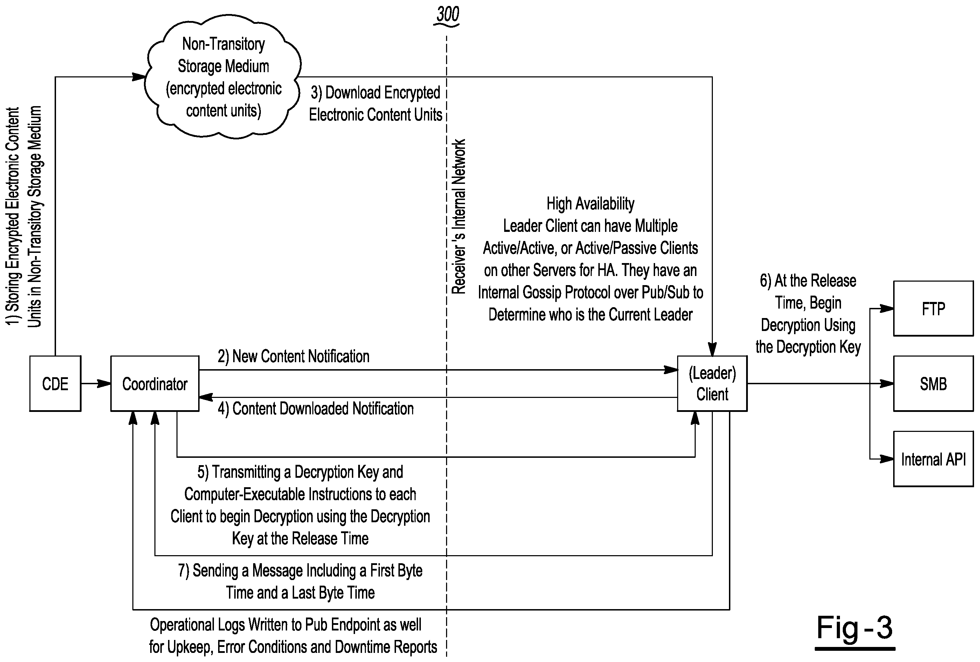

Fig. 3 is another flow diagram illustrating the steps of the method 300 according to an exemplary embodiment. Step 1 of the method 300 may include the CDE computer storing encrypted electronic content units in a non-transitory storage medium. Step 2 of the method 300 may include a new content notification where the CDE computer (e.g., coordinator which may be a unit of the CDE computer) transmits computer-executable instructions to each client computer for obtaining a downloadable and storable set of encrypted electronic content units. The encrypted electronic content units may be high availability content, and the client computer may be a leader client computer. Step 3 of the method 300 may include one or more client computers downloading the encrypted electronic content units. Step 4 of the method 300 may include a content downloaded notification where one or more client computers send a notification to the CDE computer (e.g., coordinator) that the client computer has downloaded the set of encrypted electronic content units. The notification may also include a current system load and estimated processing speed for decryption for one or more client computers. Step 5 of the method 300 may include transmitting to each client computer a decryption key that is configured to decrypt the set of encrypted electronic content units and transmitting computer-executable instructions to each client computer to begin decryption using the decryption key at the release time so that each client computer securely delivers decrypted content simultaneously. The release time may be calculated by the CDE computer (e.g., coordinator) when decryption is enabled for each client computer to start decrypting a first byte of the set of encrypted electronic content units. Step 6 of the method 300 may include one or more client computers beginning decryption using the decryption key at the release time where the decrypted content is available to an internal application programming interface (Internal API), a server message block (SMB), and/or a file transfer protocol (FTP). Step 7 of the method 300 may include sending a message from one or more client computers to the CDE computer (e.g., coordinator) once a last byte of the encrypted electronic content units is decrypted where the notification may include a first byte time and a last byte time. The first byte time may be the time at which the first byte of encrypted electronic content units was decrypted, and the last byte time may be the time at which the last byte of encrypted electronic content units was decrypted. The message in step 7 of the method 300 may also include operational logs of one or more client computers. The method 300 may also include a step of the CDE computer (e.g.,

coordinator) acquiring operating variable information including: latency of any hardware used by client computers (some or all), proximity between client computers (some or all) and a Network Time Protocol (NTP) computer, and proximity between a CDE computer (e.g., a coordinator) and client computers (some or all). One or more client computers may be continuously communicating with a designated NTP computer throughout the steps of the method 300 without receiving instructions from the CDE computer. Communication between one or more client computers and a designated NTP computer may serve to establish an orchestration time standard in which one or more client computers are synchronized with the CDE computer (e.g., coordinator) which are synchronized with a common time reference (e.g., International Atomic Time (TAI), Coordinated Universal Time ("UTC"), or Unix time).

Figs. 4A-4B is another flow diagram illustrating the steps of method 400 according to an exemplary embodiment. The method 400 may include one or more client computers determining an orchestration time standard in which one or more client computers are synchronized with the CDE computer which are synchronized with a time standard (e.g., International Atomic Time (TAI), Coordinated Universal Time ("UTC"), or Unix Time). At regular intervals (every 10 seconds, preferably every 5 seconds, still more preferably every 1 second, even still more preferably every 500, 100, 10, 5, or 1 millisecond), one or more client computers may communicate with an NTP computer to observe averages and establish a local orchestration time standard, meaning that the local time of the client computer is synchronized with the orchestration time standard. Specifically, the NTP computer may receive a client computer request. The time of the request and/or the time of receipt by the client computer may be determined and logged (e.g., time as indicated by the NTP computer). For example, a round trip time between the client computer and the NTP computer is determined and logged. The client computer may then compute a network delay occasioned by the distance of the client computer from the NTP computer. This can be, for instance, determined by halving the RTT, round trip time between the client computer and the NTP computer, assuming symmetric delay, namely, that the time taken to send the request is roughly equal to the time taken to receive the response. The client computer may then calculate the offset between its local time and the time specified by the NTP computer time. For example, if the NTP computer time is ahead of the client computer local time by 50 milliseconds, and the round trip time between the client computer and the NTP computer is 20 milliseconds, the client computer would adjust its local time by 40 milliseconds (50 milliseconds minus 10 milliseconds, with 10 milliseconds being half the RTT). This adjustment may thus help to ensure that the client computer local time is synchronized as closely as possible with the orchestration time standard that is provided by the previously described steps of polling the NTP computer. This adjustment may be applied gradually as an average over time to avoid sudden jumps in the local time, which could disrupt ongoing operations.

The method 400 may also include a step of the CDE computer obtaining operating variable information at regular intervals (e.g., in parallel with the step of determining an orchestration time standard) including: latency of any hardware used by client computers (some or all), proximity between client computers (some or all) and a Network Time Protocol (NTP) computer, and proximity between a CDE computer (e.g., a coordinator) and client computers (some or all). Specifically, obtaining operating variable information may include the client computer logging information about its current state. Further, the operating variable information may be used for the release time calculation.

The method 400 may also include a step of a client computer warming up period to prove proper orchestration time standard synchronization and other metrics to the CDE computer. The method 400 may also include a step of the CDE computer transmitting computer-executable instructions to each client computer for obtaining a downloadable and storable set of encrypted electronic content units. The method 400 may also include a step of one or more client computers downloading the encrypted electronic content units and sending a notification to the CDE computer (e.g., coordinator) that the client computer has downloaded the set of encrypted electronic content units. Further, the method 400 may include a step of the CDE computer calculating a release time, using the orchestration time standard, based on the operating variable information. The method 400 may also include one or more client computers decrypting (and preferably writing) a first byte of encrypted electronic content units at the release time using a decryption key. Additionally, the method 400 may include one or more client computers sending a notification to the CDE computer that decryption is completed. One or more of these steps may be performed in parallel with the step of determining an orchestration time standard and/or the step of the CDE computer obtaining operating variable information.

Illustrative embodiments (Embs) 1 to 30 according to the description are summarized as Emb-1 to Emb-30 here below:

Emb-1: A computer-implemented method of providing simultaneous secure delivery of decrypted electronically stored content to a plurality of remotely located client computers via an electronic communication network (e.g., the Internet) employing a plurality of computers, comprising the steps of:

(a) transmitting computer-executable instructions to each client computer for obtaining encrypted content having a downloadable and storable set of encrypted electronic content units;
(b) transmitting to each client computer a decryption key that is configured to decrypt the set of encrypted electronic content units;

(c) acquiring operating variable information about a plurality of the client computers (preferably, each client computer) including:

> latency of any hardware used by each client computer;
> proximity between each client computer and a Network Time Protocol (NTP) computer; and
> proximity between a coordinator and each client computer;

(d) establishing an orchestration time standard to synchronize all client computers with the coordinator;
(e) calculating a release time (preferably using the orchestration time standard), using the operating variable information, when decryption is enabled for each client computer to start decrypting (and preferably writing) a first byte of the set of encrypted electronic content units; and
(f) transmitting computer-executable instructions to each client computer to begin the decrypting using the decryption key at the release time so that each client computer securely delivers the decrypted content simultaneously.

Emb-2: The method according to Emb-1, wherein the method includes the coordinator delivering (i.e., the coordinator delivers) the downloadable and storable set of encrypted electronic content units directly to each client computer; and/or wherein the method includes instructing each client computer to download (i.e., each client computer downloads), from a non-transitory computer-readable storage medium, the encrypted content having the downloadable and storable set of encrypted electronic content units.

Emb-3: The method according to Emb-1 or Emb-2, wherein the entirety of the set of encrypted electronic content units is downloaded at once by the client computer and is not parsed to separate one or more units from other units or otherwise provide disparate treatment to one or more units relative to other units; wherein no encrypted electronic content units of the set are withheld at time of download; and/or wherein a download rate of the encrypted electronic content units is unrestricted for each client computer.

Emb-4: The method according to any of the preceding Embs, wherein the storage medium is a cloud-based storage platform.

Emb-5: The method according to any of the preceding Embs, wherein the downloadable and storable set of encrypted electronic content units includes data for providing text, images, audio, and/or video and may be selected from a group consisting of press releases, annual earnings statements, quarterly reports, product launches, financial reports, dividend announcements, debt issuance, stock issuance, stock buybacks, and corporate sales or acquisition announcements, and wherein the set of encrypted electronic content units includes a regulated communication and/or a communication by a regulated publicly traded entity, such as a communication and/or entity that is regulated by the United States Securities and Exchange Commission.

Emb-6: The method according to any of the preceding Embs, wherein the method includes the coordinator instructing (i.e., the coordinator instructs) each client computer to communicate with a designated NTP computer to establish the orchestration time standard; or wherein the method includes each client computer continuously communicating (i.e., each client computer continuously communicates) with its designated NTP computer without receiving instructions from the coordinator to establish the orchestration time standard.

Emb-7: The method according to any of the preceding Embs, wherein the method includes instructing each client computer to send (i.e., each client computer sends) NTP latency information to the coordinator.

Emb-8: The method according to any of the preceding Embs, wherein the method includes the coordinator delivering (i.e., the coordinator delivers) the decryption key directly to each client computer; and/or wherein the method includes instructing each client computer to download (i.e., each client computer downloads), from the non-transitory computer-readable storage medium, the decryption key.

Emb-9: The method according to any of the preceding Embs, wherein the method includes sending concurrently to each client computer a package of information that includes the calculated release time and the decryption key.

Emb-10: The method according to any of the preceding Embs, wherein step (c) is performed repeatedly to obtain multiple data points that are averaged for determining the operating variable information.

Emb-11: The method according to any of the preceding Embs, wherein the method includes instructing the plurality of client computers to temporarily pause (i.e., the plurality of client computers will temporarily pause) providing simultaneous secure content delivery if the NTP computer stops functioning, and wherein the method includes instructing the plurality of client computers to resume (i.e., the plurality of client computers will resume) providing simultaneous secure content delivery when the NTP computer resumes functioning properly.

Emb-12: The method according to any of the preceding Embs, wherein the release time is the same for one or more client computers.

Emb-13: The method according to any of the preceding Embs, wherein the step of calculating the release time is done using time information, particularly ($t_{ack,max}$), indicative of a location of one, more than one, or all of the client computers to one or more designated NTP computers.

Emb-14: The method according to any of the preceding Embs, wherein the step of calculating the release time includes accounting for a safety margin ($\delta$) based upon past performance of the method.

Emb-15: The method according to any of the preceding Embs, wherein the release time is calculated using a first formula:

$$t_{release\ time} = t_{ack,max} + \frac{RTT_{max}}{2} + \delta + \tau_{max}$$

wherein $RTT_{max}$ is a maximum time, from among the plurality of client computers, to send a message from the client computer to the coordinator back to the client computer, and is calculated by a second formula:

$$RTT_{max} = \max(RTT_1, RTT_2, \dots, RTT_n)$$

wherein $t_{ack,max}$ is a maximum time, from among the plurality of client computers, for the client computer to acknowledge a communication from the NTP computer, and is calculated by a third formula:

$$t_{ack,max} = \max(t_{ack,1}, t_{ack,2}, \dots, t_{ack,n})$$

wherein $\delta$ is the safety margin that is derived from stored historical data of variance in performance of the network and computational delays of each client computer; and
wherein $\tau_{max}$ represents a maximum expected time, from among the plurality of client computers, for the client computer to decrypt and process the encrypted electronic content units, and is computed with a fourth formula:

$$\tau_{max} = \max(\tau_1, \tau_2, \dots, \tau_n).$$

Emb-16: The method according to any of the preceding Embs, wherein the method includes instructing a new client computer to undergo (i.e., a new client computer undergoes) a warmup period during which the new client computer calibrates its $RTT_{max}$, $t_{ack,max}$, and $\tau_{max}$ with the plurality of client computers using test electronic content units, and wherein the method includes instructing the new client computer to join (i.e., the new client computer joins) the plurality of client computers in providing simultaneous secure content delivery once the $RTT_{max}$, $t_{ack,max}$, and $\tau_{max}$ values associated with the new client computer stabilize.

Emb-17: The method according to any of the preceding Embs, wherein the method includes instructing a client computer to stop (i.e., a client computer stops) providing simultaneous secure content delivery if values of $RTT_{max}$, $t_{ack,max}$, and $\tau_{max}$ associated with the client computer are beyond an established threshold.

Emb-18: The method according to any of the preceding Embs, including a step of storing on the non-transitory computer-readable storage medium information obtained from the acquiring step (c) and/or the establishing step (d) and/or the calculating step (e).

Emb-19: The method according to any of the preceding Embs, wherein step (f) is performed concurrently or consecutively with steps (a) and/or (b).

Emb-20: The method according to any of the preceding Embs, wherein the transmitting to each client computer a decryption key step (b) and the transmitting computer-executable instructions to each client computer step (f) occur at the same time after the calculating a release time step (e); or wherein the transmitting computer-executable instructions step (a) and the transmitting a decryption key step (b) each precede the establishing an orchestration time standard step (d); or wherein the transmitting a decryption key step (b) precedes the transmitting computer-executable instructions step (a); or wherein the transmitting computer-executable instructions to each client computer to begin decryption step (f) occurs as its own discrete step after the transmitting a decryption key step (b).

Emb-21: The method according to any of the preceding Embs, wherein a total number of client computers may be greater than 2 and up to 10, or greater than 10 and up to 100, or greater than 100 and up to 1000, or greater than 1000 and up to 10,000.

Emb-22: The method according to any of the preceding Embs, wherein each of the steps (a)-(f) are performed by the coordinator, and the method includes a step of the coordinator receiving a notification from at least one of the client computers that such client computer has downloaded the set of encrypted electronic content units and/or has downloaded the decryption key, and logging a Round Trip Time (RTT) that elapsed from a time between initiation of the transmitting computer-executable instructions step (a) and/or the transmitting a decryption key step (b) and a time when such notification is received by the coordinator.

Emb-23: The method according to any of the preceding Embs, wherein the method includes a step of estimating a decryption time required for one, more than one, or all of the client computers to decrypt the encrypted electronic content units.

Emb-24: The method according to any of the preceding Embs, wherein the method is performed in the absence of any request by an agent or in response to a request by an agent.

Emb-25: The method according to any of the preceding Embs, wherein the steps of the method begin as soon as the coordinator is aware of a new set of encrypted electronic content units stored in a non-transitory computer-readable storage medium.

Emb-26: The method according to any of the preceding Embs, wherein the simultaneous secure delivery for all client computers spans a period of time less than one second, preferably less than 500 milliseconds, still more preferably less than 100 milliseconds, still more preferably less than 50 milliseconds, still more preferably less than 10 milliseconds, and even still more preferably less than 5 milliseconds.

Emb-27: The method according to any of the preceding Embs, wherein any step that includes a client computer securely delivering decrypted content includes a step of downloading and storing such content.

Emb-28: The method according to any of the preceding Embs, wherein the method includes a step of logging information about one, more than one, or all of the method steps, preferably by logging the information to an application programming interface maintained by the coordinator.

Emb-29: A system configured to perform the method according to any of the preceding Embs, the system including at least one coordinator, at least one client computer, a wired and/or wireless communication pathway enabling signaling communication between the at least one coordinator and the at least one client computer, and software located on a non-transitory computer-readable storage medium that is configured to perform the steps of any of the preceding Embs.

Emb-30: A non-transitory computer-readable storage medium carrying one or more sequences of computer-executable instructions that, when accessed by the coordinator, causes the coordinator to perform operations comprising the steps of any of Emb-1 through Emb-28.

Example

To further illustrate the concepts of the present description, the following example is presented.

A global financial organization needs to release an embargoed press release simultaneously to five institutions across the world. The content is highly sensitive, and it is crucial that all institutions receive and decrypt the content at the same exact time to ensure market fairness and compliance with regulations like the United States Securities and Exchange Commission's Fair Disclosure.

There are five client computers which are financial institutions located in different regions (e.g., two in New York (A and B), London (C), Tokyo (D), and Frankfurt (E)). Each client computer has a maximum acknowledgement time ($t_{ack}$). The $t_{ack}$ for Client computer A is 50 milliseconds, Client computer B is 45 milliseconds, Client computer C is 60 milliseconds, Client computer D is 70 milliseconds, and Client computer E is 40 milliseconds. So, the $t_{ack,max}$ for all of the client computers is 70 milliseconds (the $t_{ack}$ value of Client computer D). Each client computer also has a maximum Round Trip Time (RTT). The RTT for Client computer A is 100 milliseconds, Client computer B is 120 milliseconds, Client computer C is 140 milliseconds, Client computer D is 150 milliseconds, and Client computer E is 110 milliseconds. So, the $RTT_{max}$ for all of the client computers is 150 milliseconds (the RTT value of Client computer D). Additionally, each client computer has a maximum processing time ($\tau$). The $\tau$ for Client computer A is 1800 milliseconds, Client computer B is 1695 milliseconds, Client computer C is 1795 milliseconds, Client computer D is 2648 milliseconds, Client computer E is 2100 milliseconds. So, the $\tau_{max}$ for all of the client computers is 2648 milliseconds (the $\tau$ value of Client computer D). The safety margin ($\delta$) may be based upon past performance (e.g., past network performance and/or past client computer processing performance) and is 30 milliseconds.

The CDE computer uses the above information for each client computer and the following formula to calculate the release time:

$$t_{release\ time} = t_{ack,max} + \frac{RTT_{max}}{2} + \delta + \tau_{max}$$

Filling in the numbers from the above example, the release time is computed to be 2823 milliseconds.

$$2823\ ms = 70\ ms + \frac{150\ ms}{2} + 30\ ms + 2648\ ms$$

Suppose that the current time of completing the calculation using the orchestration time standard in the system is 1723812548691 (which is the current Unix Epoch in milliseconds). So, the CDE computer would add 2823 milliseconds to that current time, which would result in 1723812551514 (Unix Epoch in milliseconds) as the release time. With this release time, the CDE computer would then send the release package to all client computers which includes the decryption key for the content and the release time of 1723812551514 (Unix Epoch in milliseconds). The client computers would then begin decrypting the content so that they could write the first byte of content at 1723812551514 (Unix Epoch in milliseconds). Thus, at 1723812551514 (Unix Epoch in milliseconds) all client computers begin writing the first byte of content.

General Comments Applicable to the Various Embodiments of the Description

As seen from above, among the benefits of the teachings herein is that in some embodiments, the method (and software and systems using it) may be free of a step of sending the decryption key without an instruction for the time at which to start decryption. Specifically, some embodiments of the present teachings envision sending a release time at which the client computers begin to decrypt the first byte of the encrypted electronic content units using the decryption key rather than simply sending the decryption key to the client computers after confirmation that the client computers have received the encrypted electronic content units. Though, it is possible that some embodiments of the method may include a step of sending the decryption key without an instruction for the time at which to start decryption.

The present teachings also contemplate a system that may be free of a core network and an edge network and may therefore avoid sending a decryption key over an edge network. Though, in other embodiments, it is possible that the system may employ separate networks for respectively transmitting the encrypted electronic content units and the decryption key. It is also possible that the system may use one or more edge servers.

Further, the method of the present teachings envisions decrypting and securely delivering the decrypted content in a range smaller than 5 seconds between all client computers (preferably less than 500 milliseconds, still more preferably less than 100 milliseconds, still more preferably less than 50 milliseconds, still more preferably less than 10 milliseconds, and even still more preferably less than 5 milliseconds).

The method may be free of any step of altering (e.g., breaking it into groups) the set of encrypted electronic content units in order to achieve simultaneous secure content delivery. For example, the method of the present teachings may be free of a step of parsing or separating the set of encrypted electronic content units when downloading the set (e.g., differentiating between impactful and non-impactful encrypted electronic content units) resulting in the entirety of the set being downloaded at once by the client computer. Thus, disparate treatment to one or more units relative to other units in the set of encrypted electronic content units is avoided. By way of another example, this may result in no encrypted electronic content units being withheld at the time of download. By way of a different example, the method of the present teachings may be free of a step of eliminating and/or modifying a portion of the set of encrypted electronic content units when securely delivering the decrypted content in order to securely deliver the content simultaneously.

Additionally, the method may be free of any step of throttling or controlling the download rate of the set of encrypted electronic content units and/or the decryption key. Thus, this may result in a scenario in which a download rate of the encrypted electronic content units is unrestricted for each client computer.

Further, the method may be free of any step requiring multiple client computers to communicate with each other. For example, in the method of the present teachings the release time may be sent to the client computers to perform simultaneous secure delivery. The release time may control when the client computers begin to decrypt the first byte of the encrypted electronic content units, and the method may be free of a step of re-synchronizing the client computers after the release time. The method of the present teachings may not envision client computers skipping over bytes and/or decrypting bytes out of order to synchronize decryption of the encrypted electronic content units with the other client computers.

Additionally, the present teachings envision the method free of a step of downloading the encrypted electronic content units in the form of a data stream. Though, in other embodiments, it is possible that the method may employ downloading the encrypted electronic content units in the form of a data stream.

The present teachings envision a system where the CDE computer (e.g., coordinator) communicates with the client computers through a wireless connection. Though, in other embodiments, it is possible that the system may employ communicating with the client computers through a connection other than a wireless connection (e.g., wired connection).

Further, the present teachings envision a system free of having an intermediary device between the CDE computer (e.g., coordinator) and the client computers. Though, in other embodiments, it is possible that the system may have an intermediary device between the CDE computer and the client computers.

Additionally, the present teachings envision a system where the CDE computer (e.g., coordinator) is separate from the non-transitory computer-readable storage medium. Though, in other embodiments, it is possible that the CDE computer may be combined with the non-transitory computer-readable storage medium.

It is understood that conventional tools may be used for managing data and performance including but not limited to operational logs, error conditions, and downtime reports.

Unless otherwise stated, all ranges include both endpoints and all numbers between the endpoints. The use of "about" or "approximately" in connection with a range applies to both ends of the range. Thus, "about 20 to 30" is intended to cover "about 20 to about 30", inclusive of at least the specified endpoints. The specification of ranges herein also contemplates individual amounts falling within the range.

The disclosures of all articles and references, including patent applications and publications, are incorporated by reference in their entirety for all purposes. References to the term "consisting essentially of" to describe a combination shall include the elements, ingredients, components or steps identified, and such other elements ingredients, components or steps that do not materially affect the basic and novel characteristics of the combination. The use of the terms "comprising," "including," "having," to describe combinations of elements, ingredients, components or steps herein also contemplates embodiments that consist essentially of, or even consist of, the elements, ingredients, components or steps.

Plural elements, ingredients, components, or steps can be provided by a single integrated element, ingredient, component, or step. Alternatively, a single integrated element, ingredient, component or step might be divided into separate plural elements, ingredients, components or steps. Unless it is unambiguously clear from the context, the use of "a" or "one" has its typical meaning of one or more, and is not intended to foreclose additional elements, components or steps. Likewise, any reference to "first" or "second" items is not intended to foreclose additional items (e.g., third, fourth, or more items); such additional items are also contemplated, unless otherwise unambiguously clear from the context.

It is understood that the above description is intended to be illustrative and not restrictive. Many embodiments as well as many applications besides the examples provided will be apparent to those of skill in the art upon reading the above description. It is further intended that any combination of the features of different aspects or embodiments of the present teachings may be combined. The scope of the present teachings should, therefore, be determined not with reference to the above description, but should instead be determined with reference to the appended claims, along with the full scope of equivalents to which such claims are entitled. The disclosures of all articles and references, including patent applications and publications, are incorporated by reference for all purposes. The omission in the following claims of any aspect of subject matter that is disclosed herein is not a disclaimer of such subject matter, nor should it be regarded that the inventors did not consider such subject matter to be part of the disclosed inventive subject matter.

**Claims**

1. A computer-implemented method of providing simultaneous secure delivery of decrypted electronically stored content to a plurality of remotely located client computers via an electronic communication network (e.g., the Internet) employing a plurality of computers, comprising the steps of:

(a) transmitting computer-executable instructions to each client computer for obtaining encrypted content having a downloadable and storable set of encrypted electronic content units;

(b) transmitting to each client computer a decryption key that is configured to decrypt the set of encrypted electronic content units;

(c) acquiring operating variable information about a plurality of the client computers (preferably, each client computer) including:

latency of any hardware used by each client computer;

proximity between each client computer and a Network Time Protocol (NTP) computer; and

proximity between a coordinator and each client computer;

(d) establishing an orchestration time standard to synchronize all client computers with the coordinator;

(e) calculating a release time (preferably using the orchestration time standard), using the operating variable information, when decryption is enabled for each client computer to start decrypting (and preferably writing) a first byte of the set of encrypted electronic content units; and

(f) transmitting computer-executable instructions to each client computer to begin the decrypting using the decryption key at the release time so that each client computer securely delivers the decrypted content simultaneously.

2. The method of claim 1, wherein a) the method includes the coordinator delivering the downloadable and storable set of encrypted electronic content units directly to each client computer; and/or wherein the method includes instructing each client computer to download, from a non-transitory computer-readable storage medium (preferably a cloud-based storage platform), the encrypted content having the downloadable and storable set of encrypted electronic content units; and/or wherein b) the entirety of the set of encrypted electronic content units is downloaded at once by the client computer and is not parsed to separate one or more units from other units or otherwise provide disparate treatment to one or more units relative to other units; wherein no encrypted electronic content units of the set are withheld at time of download; and/or wherein a download rate of the encrypted electronic content units is unrestricted for each client computer.

3. The method of any of claim 1 or claim 2, wherein the downloadable and storable set of encrypted electronic content units includes data for providing text, images, audio, and/or video and may be selected from a group consisting of press releases, annual earnings statements, quarterly reports, product launches, financial reports, dividend announcements, debt issuance, stock issuance, stock buybacks, and corporate sales or acquisition announcements, and wherein the set of encrypted electronic content units includes a regulated communication and/or a communication by a regulated publicly traded entity, such as a communication and/or entity that is regulated by the United States Securities and Exchange Commission.

4. The method of any of claims 1 through 3, wherein a) the method includes the coordinator instructing each client computer to communicate with a designated NTP computer to establish the orchestration time standard; or wherein the method includes each client computer continuously communicating with its designated NTP computer without receiving instructions from the coordinator to establish the orchestration time standard; and/or wherein b) the method includes instructing each client computer to send NTP latency information to the coordinator.

5. The method of any of claims 1 through 4, wherein a) the method includes the coordinator delivering the decryption key directly to each client computer; and/or wherein the method includes instructing each client computer to download, from the non-transitory computer-readable storage medium, the decryption key; and/or wherein b) the method includes sending concurrently to each client computer a package of information that includes the calculated release time and the decryption key.

6. The method of any of claims 1 through 5, wherein step (c) is performed repeatedly to obtain multiple data points that are averaged for determining the operating variable information; and/or the method including a step of storing on the non-transitory computer-readable storage medium information obtained from the acquiring step (c) and/or the establishing step (d) and/or the calculating step (e).

7. The method of any of claims 1 through 6, wherein the method includes instructing the plurality of client computers to temporarily pause providing simultaneous secure content delivery if the NTP computer stops functioning, and wherein the method includes instructing the plurality of client computers to resume providing simultaneous secure content delivery when the NTP computer resumes functioning properly.

8. The method of any of claims 1 through 7, wherein a) the release time is the same for one or more client computers; and/or wherein b) the step of calculating the release time is done using time information, particularly ($\tau_{ack,max}$), indicative of a location of one, more than one, or all of the client computers to one or more designated NTP computers; and/or wherein c) the step of calculating the release time includes accounting for a safety margin ($\delta$) based upon past performance of the method.

9. The method of any of claims 1 through 8, wherein the release time is calculated using a first formula:

$$t_{release\ time} = t_{ack,max} + \frac{RTT_{max}}{2} + \delta + \tau_{max}$$

wherein $RTT_{max}$ is a maximum time, from among the plurality of client computers, to send a message from the client computer to the coordinator back to the client computer, and is calculated by a second formula:

$$RTT_{max} = \max(RTT_1, RTT_2, ..., RTT_n)$$

wherein $t_{ack,max}$ is a maximum time, from among the plurality of client computers, for the client computer to acknowledge a communication from the NTP computer, and is calculated by a third formula:

$$t_{ack,max} = \max(t_{ack,1}, t_{ack,2}, ..., t_{ack,n})$$

wherein $\delta$ is the safety margin that is derived from stored historical data of variance in performance of the network and computational delays of each client computer; and
wherein $\tau_{max}$ represents a maximum expected time, from among the plurality of client computers, for the client computer to decrypt and process the encrypted electronic content units, and is computed with a fourth formula:

$$\tau_{max} = \max(\tau_1, \tau_2, ..., \tau_n).$$

10. The method of any of claims 1 through 9, wherein a) the method includes instructing a new client computer to undergo a warmup period during which the new client computer calibrates its $RTT_{max}$, $t_{ack,max}$, and $\tau_{max}$ with the plurality of client computers using test electronic content units, and wherein the method includes instructing the new client computer to join the plurality of client computers in providing simultaneous secure content delivery once the $RTT_{max}$, $t_{ack,max}$, and $\tau_{max}$ values associated with the new client computer stabilize; and/or wherein b) the method includes instructing a client computer to stop providing simultaneous secure content delivery if values of $RTT_{max}$, $t_{ack,max}$, and $\tau_{max}$ associated with the client computer are beyond an established threshold.

11. The method of any of claims 1 through 10, wherein step (f) is performed concurrently or consecutively with steps (a) and/or (b); and/or wherein the transmitting to each client computer a decryption key step (b) and the transmitting computer-executable instructions to each client computer step (f) occur at the same time after the calculating a release time step (e), or wherein the transmitting computer-executable instructions step (a) and the transmitting a decryption key step (b) each precede the establishing an orchestration time standard step (d), or wherein the transmitting a decryption key step (b) precedes the transmitting computer-executable instructions step (a), or wherein the transmitting computer-executable instructions to each client computer to begin decryption step (f) occurs as its own discrete step after the transmitting a decryption key step (b); and/or wherein each of the steps (a)-(f) are performed by the coordinator, and the method includes a step of the coordinator receiving a notification from at least one of the client computers that such client computer has downloaded the set of encrypted electronic content units and/or has downloaded the decryption key, and logging a Round Trip Time (RTT) that elapsed from a time between initiation of the transmitting computer-executable instructions step (a) and/or the transmitting a decryption key step (b) and a time when such notification is received by the coordinator.

12. The method of any of claims 1 through 11, wherein a) the method includes a step of estimating a decryption time required for one, more than one, or all of the client computers to decrypt the encrypted electronic content units; and/or wherein b) a total number of client computers may be greater than 2 and up to 10, or greater than 10 and up to 100, or greater than 100 and up to 1000, or greater than 1000 and up to 10,000; and/or wherein c) the method is performed in the absence of any request by an agent or in response to a request by an agent; and/or wherein d) the steps of the method begin as soon as the coordinator is aware of a new set of encrypted electronic content units stored in the non-transitory computer-readable storage medium.

13. The method of any of claims 1 through 12, wherein a) the simultaneous secure delivery for all client computers spans a period of time less than one second, preferably less than 500 milliseconds, still more preferably less than 100 milliseconds, still more preferably less than 50 milliseconds, still more preferably less than 10 milliseconds, and even still more preferably less than 5 milliseconds; and/or wherein b) any step that includes a client computer securely delivering decrypted content includes a step of downloading and storing such content; and/or wherein c) the method includes a step of logging information about one, more than one, or all of the method steps, preferably by logging the information to an application programming interface maintained by the coordinator.

14. A system configured to perform the method of any of claims 1 through 13, the system including at least one coordinator, at least one client computer, a wired and/or wireless communication pathway enabling signaling communication between the at least one coordinator and the at least one client computer, and software located on a non-transitory computer-readable storage medium that is configured to perform the steps of any of claims 1 through 13.

15. A non-transitory computer-readable storage medium carrying one or more sequences of computer-executable instructions that, when accessed by the coordinator, causes the coordinator to perform operations comprising the steps of any of claims 1 through 13.

Fig - 1

Fig - 2

*300*

Non-Transitory Storage Medium (encrypted electronic content units)

1) Storing Encrypted Electronic Content Units in Non-Transitory Storage Medium

3) Download Encrypted Electronic Content Units

Receiver's Internal Network

High Availability
Leader Client can have Multiple Active/Active, or Active/Passive Clients on other Servers for HA. They have an Internal Gossip Protocol over Pub/Sub to Determine who is the Current Leader

6) At the Release Time, Begin Decryption Using the Decryption Key

FTP

SMB

Internal API

CDE

Coordinator

2) New Content Notification

4) Content Downloaded Notification

(Leader) Client

5) Transmitting a Decryption Key and Computer-Executable Instructions to each Client to begin Decryption using the Decryption Key at the Release Time

7) Sending a Message Including a First Byte Time and a Last Byte Time

Operational Logs Written to Pub Endpoint as well for Upkeep, Error Conditions and Downtime Reports

Fig-3

EP 4 704 386 A1

<u>400</u>

| Content Delivery Engine | | Client | | NTP Computer | | File |

**Par** — Determining Orchestration Time Standard

**Loop** — [At Regular Intervals]

What Time is it?

The Time is X

Observe Averages and Create Local Orchestration Time Standard

Determine Local Orchestration Time Standard

**Par** — Clients Logging Local State

Figuring out Variables for Release Time Calculations

Client Logs information about Current State

Calculating Operating Variable Information

Determines Operating Variable Information

(A)          (B)          (C)          (D)

<u>Fig-4A</u>

Fig-4B

## EUROPEAN SEARCH REPORT

**Application Number**

EP 25 19 7760

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2017/094016 A1 (CHEN MING [US] ET AL) 30 March 2017 (2017-03-30) * paragraphs [0007] - [0016], [0026] - [0047]; figures 1A,1B,2,4 * ----- | 1-15 | INV. H04L9/40 H04L67/06 H04L67/62 |
| Y | US 2022/104010 A1 (STOCKHAMMER THOMAS [DE] ET AL) 31 March 2022 (2022-03-31) * paragraphs [0033] - [0067]; figures 3, 4, 5, 6, 7 * ----- | 1-15 | |
| A | US 2019/068704 A1 (BLOCK JAY ADLAO [PH] ET AL) 28 February 2019 (2019-02-28) * paragraphs [0035] - [0042], [0101] - [0111], [0114]; figure 5 * ----- | 1-15 | |

**TECHNICAL FIELDS SEARCHED (IPC)**

H04L

The present search report has been drawn up for all claims

| Place of search | Date of completion of the search | Examiner |
|---|---|---|
| Munich | 9 December 2025 | Kaplan, Alihan |

## ANNEX TO THE EUROPEAN SEARCH REPORT
## ON EUROPEAN PATENT APPLICATION NO.

EP 25 19 7760

This annex lists the patent family members relating to the patent documents cited in the above-mentioned European search report.
The members are as contained in the European Patent Office EDP file on
The European Patent Office is in no way liable for these particulars which are merely given for the purpose of information.

09-12-2025

| Patent document cited in search report | Publication date | Patent family member(s) | Publication date |
|---|---|---|---|
| US 2017094016 A1 | 30-03-2017 | NONE | |
| US 2022104010 A1 | 31-03-2022 | BR 112023004646 A2 | 18-04-2023 |
| | | CN 116325757 A | 23-06-2023 |
| | | EP 4222976 A1 | 09-08-2023 |
| | | KR 20230079362 A | 07-06-2023 |
| | | PH 12023550208 A1 | 24-06-2024 |
| | | TW 202215854 A | 16-04-2022 |
| | | US 2022104010 A1 | 31-03-2022 |
| | | WO 2022072089 A1 | 07-04-2022 |
| US 2019068704 A1 | 28-02-2019 | NONE | |

EPO FORM P0459

For more details about this annex : see Official Journal of the European Patent Office, No. 12/82

**Patent documents cited in the description**

- US 63688452 A
- US 63688825 A
- US 63854873 A
- US 20220104010 A
- US 9313531 B
- US 9591043 B
- US 8738798 B
- US 7069245 B